# EUROPEAN PATENT APPLICATION

(11) **EP 4 678 322 A1**
(43) Date of publication of application: **14.01.2026**
(21) Application number: 25189460.6
(22) Date of filing: 14.07.2025
(51) Int. Cl.: B23H 7/10

(54) **WIRE ELECTRICAL DISCHARGE MACHINING DEVICE WITH INTERCHANGEABLE TOOL HOLDING SYSTEM**

(30) Priority: 12.07.2024 US 202418771101
(71) Applicant: PRATT & WHITNEY CANADA CORP., Longueuil, Québec J4G 1A1 (CA)
(72) Inventor: ING, Visal, (01BE5) Longueuil, J4G 1A1 (CA); GUIASSA, Rachid, (01BE5) Longueuil, J4G 1A1 (CA); JEAN, Daniel, (01BE5) Longueuil, J4G 1A1 (CA)
(74) Representative: Dehns

(57) **Abstract**

The present wire electrical discharge machining device (50) for machining a workpiece (54) includes an electrical discharge machining wire (62) spanning between and supported by a first guide assembly (65A) and a second guide assembly (65B). The first guide assembly (65A), which includes a first electrode guide (60A) and a first nozzle (74A), is located on an upper head (80A) and the second guide assembly (65B) located on a lower head (80B) of the wire electrical discharge machining device (50). A tool holding system (100) removably mounts the first guide assembly (65A) to the upper head (80A), the tool holding system (100) being operable in either an engaged configuration or a released configuration. In the engaged configuration, the first guide assembly (65A) is retained in an operating position. In the released configuration, the first guide assembly (65A) is detachable from the upper head (80A) of the wire electrical discharge machining device (50) for interchange with a replacement component.

## Description

### TECHNICAL FIELD

The application relates generally to wire electrical discharge machining systems and methods of machining components using such systems.

### BACKGROUND

Wire electrical discharging machining ("wire-EDM"), sometimes also referred to as wire electro-discharge machining, is a machining process that uses a wire electrode to accurately machine components. For example, it is known to use wire-EDM during the manufacture of aircraft engine components, such as rotor disks for example. Various systems and methods are known in the art for wire electrical discharging machining. While these known machining systems and methods have various benefits and are suitable for their intended purposes, there remains room or improvement.

### SUMMARY

In accordance with one aspect of the present invention, there is provided a wire electrical discharge machining device for machining a workpiece, comprising: an electrical discharge machining wire spanning between and supported by a first guide assembly and a second guide assembly, the first guide assembly located on an upper head of the wire electrical discharge machining device and the second guide assembly located on a lower head of the wire electrical discharge machining device, the first guide assembly including a first electrode guide and a first nozzle; and a tool holding system removably mounting at least the first guide assembly to the upper head of the wire electrical discharge machining device, the tool holding system operable in either an engaged configuration or a released configuration, wherein in the engaged configuration the first guide assembly is retained in an operating position and in the released configuration the first guide assembly is detachable from the upper head of the wire electrical discharge machining device for interchange with a replacement component.

The wire electrical discharge machining device as defined above and described herein may further include one or more of the following features, in whole or in part, and in any combination.

In an embodiment of the above, the tool holding system includes a clamping device, the clamping device releasably locking the first guide assembly or the replacement component in the operating position.

In an embodiment according to any of the previous embodiments, the clamping device includes a coupling, the coupling a mechanical coupling, a hydraulic coupling, a magnetic or electro-magnetic coupling, a pneumatic coupling, or a combination of any one or more thereof.

In an embodiment according to any of the previous embodiments, the coupling of the clamping device includes one or more locking elements which are actuated radially inwardly toward a reference axis to retain the first guide assembly and/or the replacement component in the operating position.

In an embodiment according to any of the previous embodiments, the replacement component is another guide assembly or a probe.

In an embodiment according to any of the previous embodiments, a replacement guide assembly is interchangeable with the first guide assembly, the replacement guide assembly being retained in the operating position by the tool holding system upon removal of the first guide assembly.

In an embodiment according to any of the previous embodiments, a probe is adapted for accurately determining a position of the workpiece to be machined, wherein the probe is retained in a probing position by the tool holding system in the engaged configuration, the probing position of the probe and the operating position of the first guide assembly being aligned.

In an embodiment according to any of the previous embodiments, a probe axis extending through the probe in the probing position is aligned with a tool axis defined by a working portion of the electrical discharge machining wire between first guide assembly and a second guide assembly.

In an embodiment according to any of the previous embodiments, a controller is in signal communication with the wire electrical discharge machining device, the controller configured to determine whether a component is mounted in the tool holding system.

In an embodiment according to any of the previous embodiments, the controller is configured to recognize the first guide assembly and the replacement component.

In an embodiment according to any of the previous embodiments, one or more manipulators are configured for relatively moving the workpiece and the electrical discharge machining wire.

In an embodiment according to any of the previous embodiments, the one or more manipulators include a first manipulator configured to move the upper head and a second manipulator configured to move the lower head.

In an embodiment according to any of the previous embodiments, the second guide assembly is removably mounted to the lower head of the wire electrical discharge machining device.

In an embodiment according to any of the previous embodiments, the tool holding system includes a second clamping device, the second clamping device removably mounting the second guide assembly to the lower head.

There is also provided, in accordance with another aspect of the present invention, a method for machining a workpiece using a wire electrical discharge machining device, the method comprising: mounting a probe on an upper head of the wire electrical discharge machining device, the probe being retained in a predetermined reference position on the wire electrical discharge machining device; performing a calibration of the workpiece using the probe, including relatively displacing the probe and the workpiece; removing the probe from the upper head and mounting, in place of the probe, a guide assembly in the predetermined reference position; and providing an electrical discharge machining wire spanning between the guide assembly removably mounted to the upper head of the wire electrical discharge machining device and a second guide assembly located within a lower head of the wire electrical discharge machining device; and cutting the workpiece using the electrical discharge machining wire.

The method as defined above and described herein may further include one or more of the following features and/or steps, in whole or in part, and in any combination.

In an embodiment of the above, a tool holding system is used for: the mounting of the probe; the removing of the probe; and the mounting of the guide assembly.

In an embodiment according to any of the previous embodiments, the method includes releasably locking the probe and the guide assembly using a clamping device of the tool holding system.

In an embodiment according to any of the previous embodiments, the method includes actuating the clamping device using one of a hydraulic coupling, a pneumatic coupling, a mechanical coupling or a magnetic coupling.

In an embodiment according to any of the previous embodiments, the method includes ensuring that a probe axis extending through the probe when in position on the upper head is aligned with a tool axis extending through the guide assembly when in position on the upper head, the probe axis and the tool axis being free of any lateral offset therebetween.

There is further provided, in accordance with another aspect of the present invention, a method of operating a wire electrical discharge machining device, the method comprising: providing an electrical discharge machining wire spanning between and supported by a first guide assembly and a second guide assembly, the first guide assembly located on an upper head of the wire electrical discharge machining device and the second guide assembly located on a lower head of the wire electrical discharge machining device, the first guide assembly being located in a reference position and including a first electrode guide and a first nozzle; removing the first guide assembly from the upper head by releasing a clamping device of a tool holding system retaining the first guide assembly in place at the reference position; and replacing the first guide assembly by a replacement component, including removably mounting, using the clamping device, the replacement component on the upper head of the wire electrical discharge machining device in the reference position.

This method may further include one or more of the features and/or steps as defined above, in whole or in part, and in any combination.

### DESCRIPTION OF THE DRAWINGS

Reference is now made to the accompanying figures in which:
Fig. 1 is a schematic cross sectional view of an aircraft engine;
FIG. 2 is a schematic illustration of a manufacturing system with a wire electrical discharge machining device;
FIG. 3 is a partial schematic illustration of a removable guide assembly adapted to mounted to the wire electrical discharge machining device of Fig. 2 by a tool holding system, the guide assembly including an electrode guide engaging an electrical discharge machining wire and a nozzle;
Fig. 4 is a schematic side view of the wire electrical discharge machining device, with the removable guide assembly of Fig. 3 mounted thereto using the tool holding system;
Fig. 5 is a schematic side view of the wire electrical discharge machining device with a probe mounted thereto, in place of the removable guide assembly, using the tool holding system;
Figs. 6-7 depict clamping devices of the tool holding system of Figs. 4-5;
Fig. 8 is a schematic side view of the wire electrical discharge machining device with a probe mounted thereto, in use for probing a workpiece to be machined;
Fig. 9 is a schematic side view of the wire electrical discharge machining device with a guide assembly thereto, in place of the probe, for machining the workpiece.
Fig. 10 is a flow diagram of a method for machining a workpiece using the wire electrical discharge machining device; and
Fig. 11 is a flow diagram of a method of operating the wire electrical discharge machining device.

### DETAILED DESCRIPTION

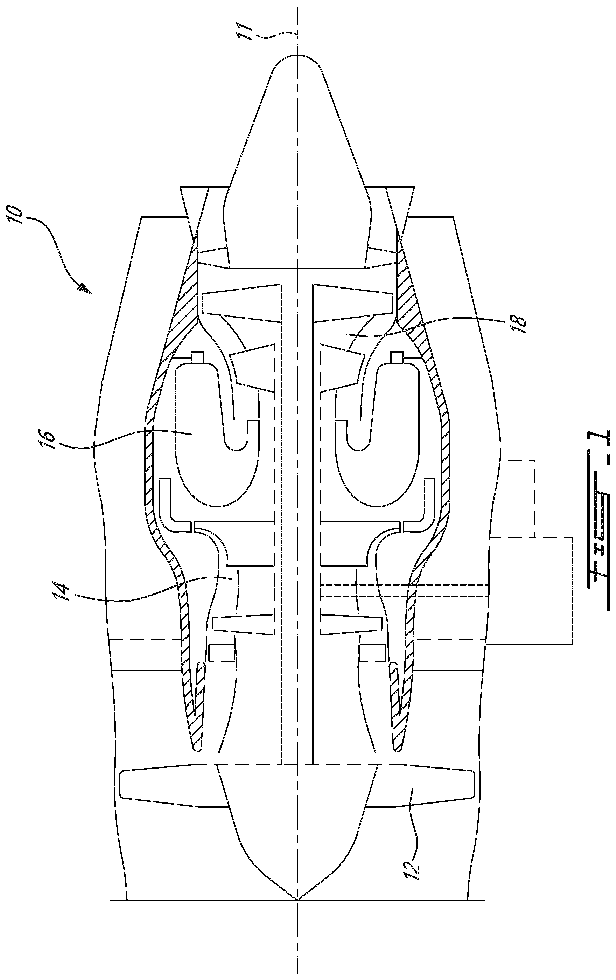

Fig. 1 illustrates an aircraft engine 10 of a type preferably provided for use in subsonic flight. In the depicted embodiment, the aircraft engine 10 is a gas turbine engine, and generally comprises in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. A main engine axis 11 extends longitudinally through the center of the engine 10.

One or more components of the aircraft engine 10, including for example a turbine disk for the turbine section 18, may be machined using wire electrical-discharge machining (wire-EDM). Such turbine discs may be machined by wire-EDM in order to form slots having "firtree" profiles, which receive correspondingly shaped roots of the turbine blades that are mounted to the turbine disk. At least the firtree profiles and/or the entire slots defined in the turbine disk may be formed using a wire-EDM operation.

Wire-EDM is a machining process in which material may be removed from a part (i.e. profiles may be formed in the part) by spark erosion caused by electric discharge between a wire electrode and a workpiece. More particularly, a thin, charged wire (i.e., the electrode) acts as the cutter for removing material from the workpiece, which is typically submerged in a dielectric fluid. Sparks are generated between the wire and the workpiece, which removes metal from the workpiece through melting and vaporization, but without requiring any direct contact between the wire and the workpiece.

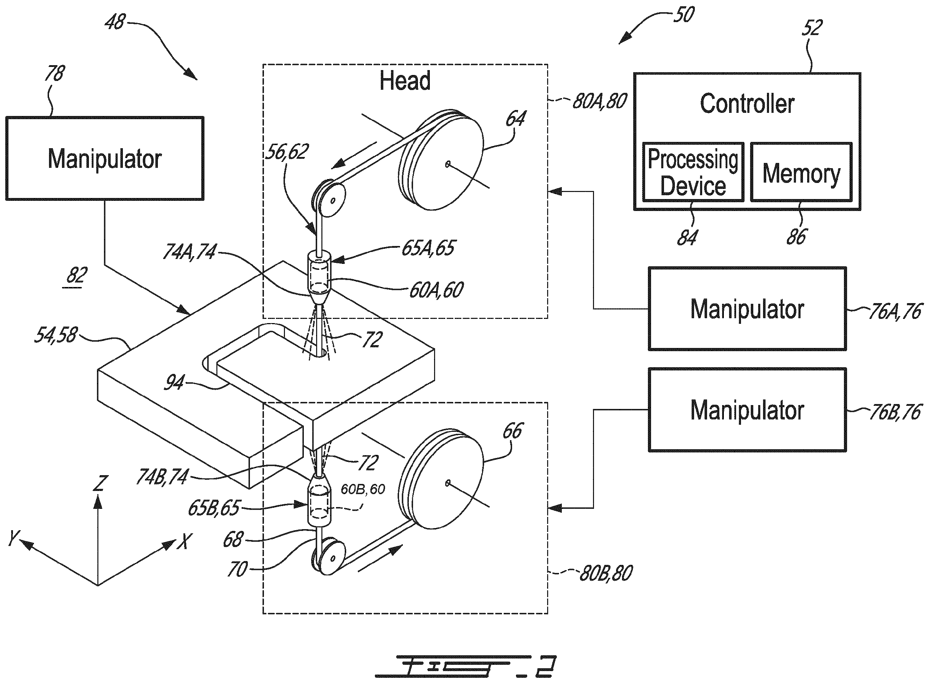

An example of a wire electrical discharge machining (wire-EDM) device 50 (which may also be referred to herein as a wire-EDM machine) is schematically illustrated in Fig. 2. More particularly, a manufacturing system 48 for manufacturing a machined part, such as but not limited to a part of the aircraft engine 10 (e.g., a turbine disk), with one or more machined apertures, slots, openings, etc. is provided. The manufacturing system 48 generally includes a wire-EDM device 50 and a controller 52 for automating operation of the wire-EDM device 50.

The wire-EDM device 50 is configured to cut electrically conductive material of a workpiece 54 to form a part or a component of a part. This wire-EDM device 50 cuts the electrically conductive material of the workpiece 54 by removing material through spark erosion induced by an electrical discharge from an electrode 56 of the wire-EDM device 50 to the electrically conductive material; here, an anode 58.

The wire-EDM device 50 of FIG. 2 includes the electrode 56 and one or more electrode guides 60 (or simply "guides"), including in this embodiment a first electrode guide 60A and a second electrode guide 60B. Here, the electrode 56 is configured as an electrical discharge machining wire 62 ("EDM wire"). This EDM wire 62 of FIG. 2 extends between a wire spool 64 and a wire draw unit 66. The EDM wire 62 is supplied by (e.g., spooled out from) the wire spool 64, and the EDM wire 62 is collected by (e.g., wound onto) the wire draw unit 66. A portion of the EDM wire 62 between the wire spool 64 and the wire draw unit 66 is supported by and spans between the guides 60. These guides 60 are configured such that a working portion 68 of the EDM wire 62 spanning between the guides 60 extends along a (e.g., straight) tool axis 70 defined by the guides 60, for example at least prior to cutting the electrically conductive material, cutting at slow speeds, etc. The working portion 68 of the EDM wire 62, for example, is pulled taut between the guides 60.

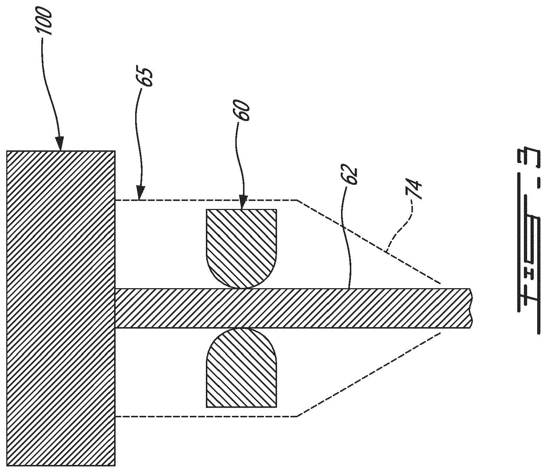

As seen in both FIG. 2 and FIG. 3, one or more of the guides 60 may each be configured as part of and/or within a guide assembly 65 that includes both the guide 60 and a nozzle 74 that directs a dielectric fluid jet 72 around the EDM wire 62. More particularly, the guides 60 comprise a first guide assembly 65A and a second guide assembly 65B. The first guide assembly 65A includes the first electrode guide 60A and a first nozzle 74A (of the nozzles 74). The second guide assembly 65B includes the second electrode guide 60B and a second nozzle 74B. In certain embodiments, the first and second electrode guides 60A, 60B may be configured as (e.g., ceramic) guide blocks and mounted within the first and second guide assemblies 65A, 65B that respectively include the first and second nozzles 74A, 74B through which the EDM wire 62 extends and is laterally positioned / supported.

The wire-EDM device 50 includes an upper head 80A and a lower head 80B (collectively, the heads 80) which may, in certain embodiments, be manipulated as noted below. The upper head 80A comprises at least the first guide assembly 65A, comprising the first electrode guide 60A and the first nozzle 74A. The upper head 80A may also include the wire spool 64 that fees the EDM wire 62 to the first guide assembly 65A. The lower head 80B comprises at least the second guide assembly 65B, comprising the second electrode guide 60B and the second nozzle 74B. the lower head 80B may also include a wire draw unit 66 that receives the used EDM wire 62 from the second guide assembly 65B.

As will be described in further detail below, at least the first guide assembly 65A (and thus the first electrode guide 60A and the first nozzle 74A) is removably mounted to the upper head 80A of the present wire-EDM device 50. In certain embodiments both the first guide assembly 65A and the second guide assembly 65B may be removably mounted to the wire-EDM device 50, or alternately only one of the first guide assembly 65A and the second guide assembly 65B is removably mounted to the wire-EDM device 50. Typical wire-EDM systems, which have permanently fixed (i.e., not detachable without disassembling the machine) upper and lower guide assemblies and nozzles fixed to their respective upper and lower heads. In contrast, in the wire-EDM device 50 described herein at least the first guide assembly 65A, and its associated first electrode guide 60A and first nozzle 74A, is removably mounted to the upper head 80A in such a manner that the first guide assembly 65A can be quickly and easily disengaged from and subsequently quickly and easily re-engaged to the upper head 80A, without any resulting loss of accuracy or need to re-calibrate the wire-EDM device 50. Stated differently, at least the first guide assembly 65A is interchangeable in a "quick connect" type of manner, such that it can be removed and replaced with another component (such as another guide assembly, a probe or another tool), without need to need for significant disassembly of the entire device and thus without requiring any significant down-time of the machine.

Referring still to FIG. 2, to facilitate the electrical discharge from the EDM wire 62 (the electrode 56) to the electrically conductive material (the anode 58), the wire-EDM device 50 may include a dielectric fluid 72. When spark discharge occurs, material from both the workpiece and the wire electrode will be removed. The discharge is supported by the dielectric fluid 72, which helps cool the process and dispose decompressed material. This dielectric fluid 72 may be directed to a cut location by the nozzles 74. The dielectric fluid 72, for example, may be directed out of the nozzles 74 as a high pressure fluid jet which surrounds the EDM wire 62. The dielectric fluid 72 may also or alternatively be supplied as a bath; e.g., a volume of the dielectric fluid 72 into which the electrically conductive material may be partially or completely submersed.

The wire-EDM device 50 may also include one or more manipulators 76A, 76B and 78. Each head manipulator 76A, 76B (generally referred to as "76") may be configured to move a respective upper head 80A and lower head 80B (collectively referred to as the heads "80") of the wire-EDM device 50 within a workspace 82. Here, each EDM device head 80 includes and/or supports at least (or only) the guide assemblies 65 and the working portion 68 of the EDM wire 62. The head manipulators 76 may thereby move the working portion 68 of the EDM wire 62 within the workspace 82. For example, the head manipulator 76A may move the upper head 80A and its guide assembly 65A in X, Y and Z directions within the workspace 82. The head manipulator 76B may move the lower head 80B and its guide assembly 65B in the X and Y directions within the workspace 82. The workpiece manipulator 78 may be configured to move the workpiece 54 in the X and Y directions within the workspace 82. Each manipulator 76, 78 may be configured as or otherwise include a robotic arm, a gantry system, a movably carriage, etc. However, various other types and configurations of manipulators are known in the art, and the present disclosure is not limited to any particular ones thereof.

Furthermore, while the wire-EDM device 50 of FIG. 2 may include all of the manipulators 76 and 78 to facilitate moving the working portion 68 of the EDM wire 62 relative to the workpiece 54 for cutting the aperture into the workpiece 54, one of the manipulators 76 or the manipulator 78 may alternatively be omitted in other embodiments. For example, the relative movement between the working portion 68 of the EDM wire 62 relative and the workpiece 54 may be facilitated by (e.g., only) the head manipulator 76A and/or 76B or the workpiece manipulator 78.

The controller 52 of FIG. 2 is in signal communication (e.g., hardwired and/or wirelessly coupled) with the wire-EDM device 50. The controller 52, for example, may be in signal communication with the device manipulators 76 and 78 as well as with one or more actuators facilitating feeding of the EDM wire 62 between the coils (i.e., the wire spool 64 and the wire draw unit 66). The controller 52 may be in signal communication with a source supplying the dielectric fluid 72; e.g., to the nozzle 74. The controller 52 may also be in signal communication with a power source providing electrical power (e.g., electricity) to the EDM wire 62; e.g., the electrode 56. The controller 52 may be implemented with a combination of hardware and software. The hardware may include at least one processing device 84 and a memory 86, which processing device 84 may include one or more single-core and/or multi-core processors. The hardware may also or alternatively include analog and/or digital circuitry other than that described above. The memory 86 is configured to store software (e.g., program instructions) for execution by the processing device 84, which software execution may control and/or facilitate performance of one or more operations such as those described in the methods below. The memory 86 may be a non-transitory computer readable medium. For example, the memory 86 may be configured as or include a volatile memory and/or a non-volatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a non-volatile memory may include a read only memory (ROM), an electrically erasable programmable read-only memory (EEPROM), a computer hard drive, etc.

During operation of the wire-EDM device 50, the EDM wire 62 (which may also simply be referred to herein as the "wire") is continuously moving as it is fed from the wire spool 64 to the wire draw unit 66, in order to ensure that a fresh section of wire is used for each part of the cutting operation. This continuous movement helps to prevent wire breakage and ensures consisting cutting conditions.

As noted above, at least the first guide assembly 65A (and thus the first electrode guide 60A and first nozzle 74A) of the present wire-EDM device 50 is removably mounted to the upper head 80A in such a manner that the first guide assembly 65A can be disengaged from, and subsequently re-engaged to, the upper head 80A without any resulting loss of accuracy or need to re-calibrate the wire-EDM device 50. This is accomplished using a tool holding system 100 of the wire-EDM device 50, as will now be described.

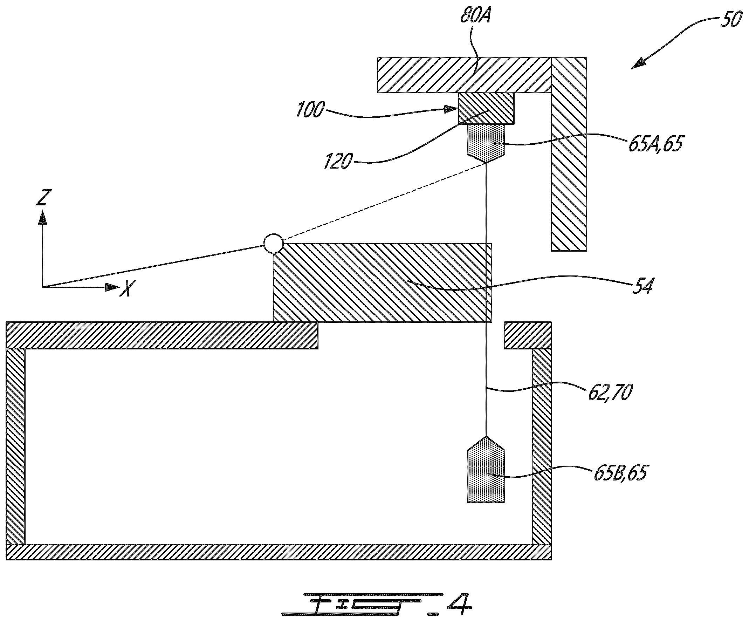

Referring now to FIGS. 3 and 4, the wire-EDM device 50 includes a tool holding system 100, which is configured for and operable to permit at least one of the guide assemblies 65 to be removably engaged with its corresponding head 80. For example, in the embodiment depicted in Fig. 4, the first guide assembly 65A is mounted to the upper head 80A using the tool holding system 100, such that the first guide assembly 65A (and thus the first electrode guide 60A and the first nozzle 74A which form part thereof - see Fig. 3) can be removed from the upper head 80A quickly, without having to dismantle any other components of the upper head 80A. All of the piping and integrated devices which may form part of the upper head 80A (not depicted in the schematic view of Fig. 4) can thus remain in place and un-touched, with only the first guide assembly 65A being detached from the upper head 80A. The tool holding system 100 thus provides a quick-change or "quick connect" type engagement system for one or more of the guide assemblies 65 of the wire-EDM device 50, including at least the first guide assembly 65A on the upper head 80A. This is at least partially made possible by the clamping device 120 of the tool holding system 100, as will be described in further detail below.

In the case where the first guide assembly 65A and the second guide assembly 65B are both removably mounted to the wire-EDM device 50, with the first guide assembly 65A being removably mounted to the upper head 80A and the second guide assembly 65B being removably mounted to the lower head 80B, then the tool holding system 100 may include the clamping device 120 which is used to removably mount the first guide assembly 65A to the upper head 80A and a second clamping device that is used to removably mount the second guide assembly 65B to the lower head 80B. This second clamping device will be same as the clamping device 120 as described below.

After it has been disconnected from the upper head 80A, either the first guide assembly 65A or a replacement component can be re-attached to the device in the same precise position thereon, without any loss of accuracy or precision. Such a replacement component may include, for example, another guide assembly or another component entirely - such as, but not limited to, a probe. The replacement guide assembly may for example be a new guide assembly, having a different size and thus that accommodates a different sized EDM wire, or alternately it may be a replacement guide assembly of the same type and size as the original guide assembly, and that is being installed in replacement of a used, worn or damaged guide assembly.

This ability to quickly remove one of the guide assemblies 65 (and thus one of the electrode guides 60 and nozzles 74) from the wire-EDM device 50 permits a malfunctioning or worn nozzle 74 or electrode guide 60 to be quickly and easily replaced with an alternate or replacement nozzle / electrode guide, should this become necessary (for example if an electrode guide or nozzle having a different size is needed or if the original electrode guide or nozzle has worn), without a loss of accuracy and without requiring a recalibration of the system. Because the original guide assembly 65 can be quickly and easily removed from the wire-EDM device 50 without requiring any substantial disassembly of the device, the machine downtime may be relatively limited (in comparison to the down time that would be required to fully disassembly and rebuilt a traditional wire-EDM machine when a nozzle replacement becomes necessary). Additionally, because the replacement guide assembly 65 is re-attached to the wire-EDM device 50 in exactly (i.e., precisely) the same position as the removed guide assembly, there is little to no need for additional calibration steps once the new guide assembly has been installed in place on the head 80 of the wire-EDM device 50.

The tool holding system 100 is accordingly configured to removably mount at least the first guide assembly 65A to the upper head 80A of the wire electrical discharge machining device 50, using a clamping device 120 that is operable in either an engaged position or a released configuration. In the engaged configuration of the clamping device 120, the first guide assembly 65A is retained in an operating position (i.e., for machining the workpiece). However, when the clamping device is in the released configuration, the first guide assembly 65A is detachable from the upper head 80A of the wire-EDM device 50 and is thereby interchangeable with a replacement component. In other words, once the original first guide assembly 65A has been detached and removed from the upper head 80A, a replacement component (e.g., another guide assembly, a probe or yet another component) can be put back in its place and mounted to the upper head 80A by actuating the clamping device 120 back into its engaged configuration.

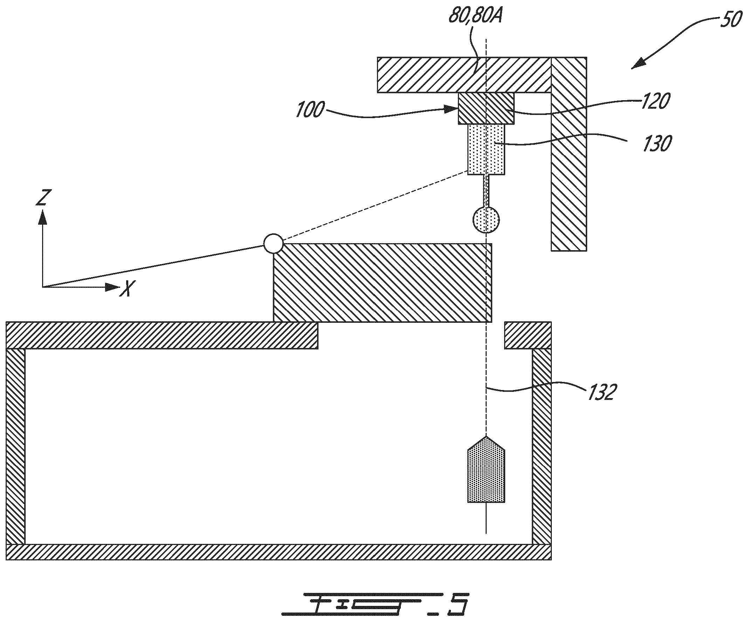

Referring now to FIGS. 4 and 5, a benefit of the present tool holding system 100 of the wire-EDM device 50 is the ability for the same clamping device 120 of the tool holding system 100 to detachably hold components other than a guide assembly, for example a probe 130 (see Fig. 5) or another component, at the same precise position on the head 80 of the wire-EDM device 50. In the case of a probe 130 being mounted on the upper head 80A of the wire-EDM device 50, as shown in Fig. 5, this enables both the probe axis 132 of the probe 130 (see Fig. 5) and the tool axis 70 defined by the working portion 68 of the EDM wire 62 (see FIGS. 2 and 4) to be substantially aligned. The tool axis 70 and the probe axis 132 may be collectively referred to herein as a reference axis. Consequently, in certain embodiments, substantially no lateral offset (in the X-Y plane) exists between the probe 130 and the EDM wire 62, which avoids the need to account for this offset and the accuracy of its measurement when aligning the workpiece and machining the part. It is to be understood, however, that the tool axis 70 and the probe axis 132 may be considered to be "substantially aligned" or "aligned" (in the meaning of the expression as used herein), even if there are minor differences therebetween which may be caused, for example, by manufacturing tolerances of each component and assembly stack-up. As such, although these two axis may be substantially aligned, it is posible that such manufacturing tolerances and/or tolerance stack up cause small offsets which may need to be compensated for. Stated differently, the probe axis extending through the probe when in position on the upper head is coaxial with the tool axis extending through the guide assembly when in position on the upper head, such that the probe axis and the tool axis are free of any lateral offset therebetween.

The controller 52 in signal communication with the wire-EDM device 50 is configured, in a particular embodiment, to determine whether a component is mounted in the tool holding system 100 and if so, which component. Consequently, the wire-EDM device 50 can be appropriately controlled or operated based on this determination. For example, the controller 52 is operable to recognize the guide assembly, the probe or another component that this mounted in the tool holding system 100 of the device, and thereby determine the properties of this specific component and thus operate the device appropriately given this information. The controller 52 is also operable to determine, once a new component (guide assembly, probe, etc.) has been mounted in the tool holding system 100, that the new component is accurately aligned and thus to confirm to the device operator, that no further calibration is required.

Traditionally, when using existing wire-EDM machines, a probe is sometimes mounted the machine at a location transversely spaced apart from the nozzle(s) - for example at the far end of the upper head. As such, existing probes are typically fixed in position on the upper head of the device (i.e., the probes are not removable) and the exact offset in the X-Y plane between the probe and the nozzle(s) needs to be measured and/or otherwise determined in order to accurately align the workpiece and then cut the feature at the target location on the workpiece. This offset thus needs to be carefully determined and the machine needs to be calibrated accordingly. These issues are rendered moot by the present wire-EDM device 50, given that both the probe 130 and the nozzles 74 are aligned in the X-Y plane, thereby avoiding the need to account for any offset (because there is none) between the probe and the EDM wire 62 extending between the nozzles 74.

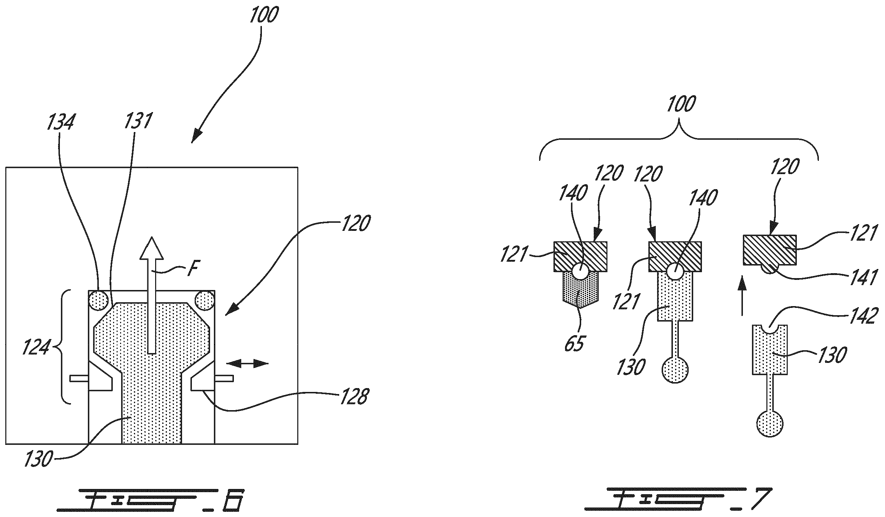

Referring now to FIG. 6, an embodiment of the clamping device 120 of the tool holding system 100 is schematically depicted and includes a coupling 124 that can hold either a guide assembly 65 or another component (such as the probe 130) in the same position on the head 80 (e.g., the upper head 80A). This coupling 124 may include a mechanical coupling, a hydraulic coupling, a magnetic or electro-magnetic coupling, a pneumatic coupling, a combination of any one or more of these coupling types, or other suitable couplings as will be appreciated by one skilled in the art in light of this disclosure. As noted above the clamping device 120, and thus the coupling 124 thereof, is operable in either an engaged position or a released configuration.

In the engaged configuration, the coupling 124 is actuated to prevent any movement or removal of the guide assembly 65 such that it is locked in its operating position (i.e., for machining the workpiece). In the case of the first guide assembly 65A removably mounted to the upper head 80A, this maintains a clamping force F in the upward direction.

The mechanical coupling 124 of the clamping device 120 ensures an accurate and repeatable mechanical connection, and may in certain embodiments include a hydraulic or pneumatic system that uses liquid or air pressure to secure retain the nozzle or the probe in place on the head of the system. Alternately, or in addition, a mechanical system may be used (including, e.g., one or more locking elements 128 which retain the detachable component (e.g., nozzle or probe) in place in the clamping device 120 when these locking elements 128 are actuated radially inwardly toward the guide assembly or other component being locked in place. Regardless of the mechanism employed, however, the clamping device 120 is such that precise axial alignment of the detachable component (e.g., nozzle or probe) which is releasably engaged in the mechanical coupling 124 of the clamping device is always maintained.

The clamping device 120 may also include one or more locating elements 134 which act to center and/or locate the probe 130 (as depicted, or alternately a guide assembly 65) within the clamping device 120 of the tool holding system 100. In one particular embodiment, the locating element 134 may include an annular ring which receives a correspondingly shaped upper portion 131 of the probe 130 As such,

As shown in FIG. 7, and as described above, the wire-EDM device 50 can be configured with either a guide assembly 65 or a probe 130 mounted in the clamping device 120 of the tool holding system 100. The mating connection of the guide assembly 65 or the probe 130 with the complimentary receptacle 121 of the clamping device 120 is such that a central reference point 140 at the interface between the two elements always remains in precise alignment, regardless of which of the components (i.e., guide assembly 65 or probe 130) is mounted and/or re-attached to the receptacle 121 of the clamping device 120. Because of the precise and repeatable alignment between the removable component and the fixed portion of the clamping device 120, there is no need to perform a calibration, or re-calibration, when any of the components is attached and/or re-attached to the tool holding system 100.

in another embodiment, depicted on the right hand side of Fig. 7, the above-noted reference point 140 may be further complemented with an axially protruding locating element 141 that is centrally disposed, at the same reference point 140, on one of the nozzle/probe and the mating receptacle of the clamping device 120. The other of the guide assembly/probe and the mating receptacle of the clamping device 120 has a corresponding and complimentary shaped aperture or socket 142 that snugly receives the locating element 141. Accordingly, when the locating element 141 and the socket 122 are matingly engaged with each other, precise and repeatable positioning of the detachable component (e.g., nozzle or probe) is ensured. The mating locating element 141 and socket 142 together provide an XYZ reference point, i.e., reference point 140, in space. Because of this repeatable and precise alignment, the probe doesn't need to be recalibrated before each use, and/or the system doesn't need to be recalibrated when switching from the probe 130 (which is used when aligning the workpiece) to the guide assembly 65 (which is used when performing the cutting operation).

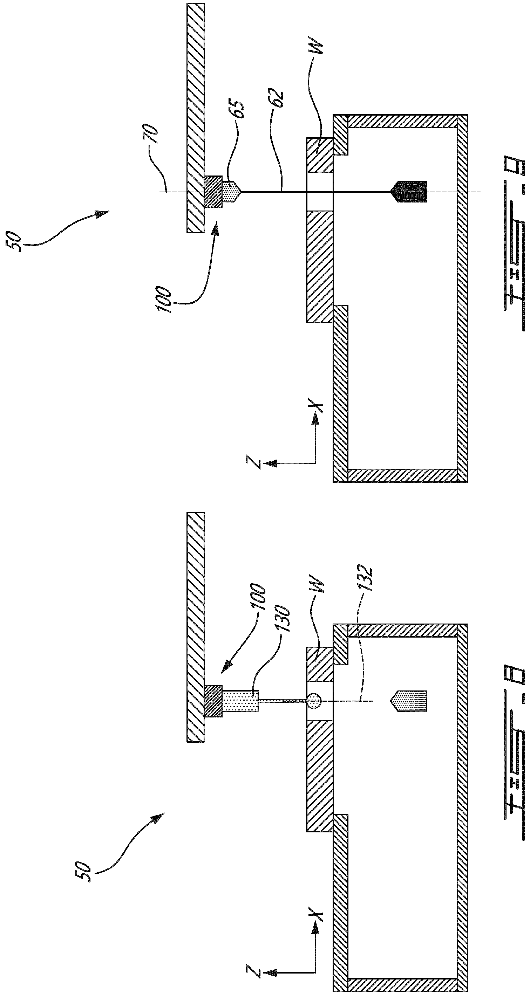

Referring to Figs. 8-9, as described herein the wire-EDM device 50 can be mounted with a probe 130 mounted in the tool holding system 100 (Fig. 8) or a guide assembly 65 (Fig. 9). As shown in Fig. 8, the probe 130 is mounted in the tool holder system 100 and the workpiece W or part to be machined can then be probed - for example in order to calibrate the workpiece W (e.g., to measure or verify dimensions, shape, or other properties thereof) which enables the system to determine the precise dimensions and location in three-dimensional space of the workpiece. Because the probe axis 132 is the same as the tool axis 70 defined by the EDM wire 62 when in place between the two guide assemblies (see Fig. 9), there is no need for the controller in communication with the wire-EDM device 50 to account for any X-Y or lateral offset therebetween. Thus, once the workpiece has been measured and calibrated by the probe 130 in this manner, the probe 130 can be removed from the tool holder system 100 and replaced by the upper guide assembly 65 through which the EDM wire 62 extends along the tool axis 70. The workpiece is then ready for machining using the wire-EDM device 50, without the need for any further calibration of either the workpiece or the tooling.

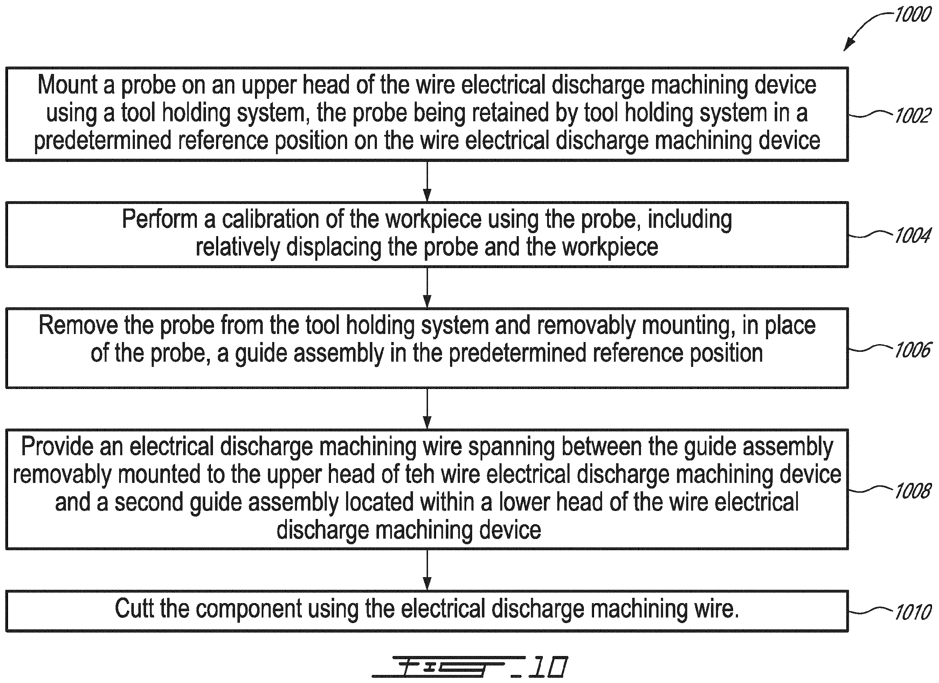

FIG. 10 is a flow diagram of a method 1000 for machining a workpiece using the wire-EDM device 50 as described herein. In step 1002, a probe is mounted on an upper head of the wire electrical discharge machining device using a tool holding system. The probe is retained in a predetermined reference position on the wire electrical discharge machining device. In step 1004, the workpiece is calibrated (e.g., measured to determine its precise dimensions and/or location in three-dimensional space) using the probe, which may include relatively displacing the probe and the workpiece. At step 1006, once this calibration has been completed, the probe is removed from the tool holding system. A guide assembly is then removably mounted, in place of the probe that has now been removed, in the tool holding system 100 in the same predetermined reference position. At step 1008, the method then includes providing an electrical discharge machining wire spanning between the guide assembly, now removably mounted to the upper head of the wire electrical discharge machining device, and a second guide assembly located within a lower head of the wire electrical discharge machining device. Finally, at step 101, the workpiece is cut or otherwise machined using the electrical discharge machining wire.

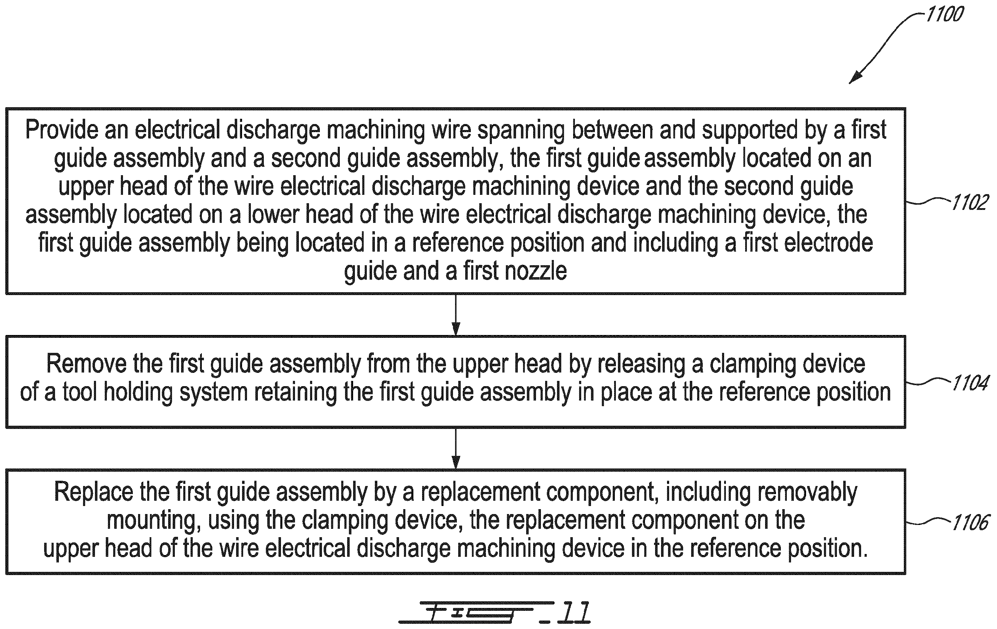

FIG. 11 is a flow diagram of a method 1100 for operating the wire electrical discharge machining device 50 as described herein. At step 1102, an electrical discharge machining wire is provided, the wire spanning between and supported by a first guide assembly and a second guide assembly. The first guide assembly is located on an upper head of the wire electrical discharge machining device and the second guide assembly located on a lower head of the wire electrical discharge machining device. The first guide assembly is located in a reference position and includes a first electrode guide and a first nozzle. At step 1104, the method further includes removing the first guide assembly from the upper head by releasing a clamping device of a tool holding system retaining the first guide assembly in place at the reference position. Subsequently, at step 1106, the first guide assembly is replaced by a replacement component, including removably mounting, using the clamping device, the replacement component on the upper head of the wire electrical discharge machining device in the reference position. This replacement component may be, for example, a probe or another guide assembly.

The present disclosure includes systems and methods for manufacturing a machined component, such as but not limited to a component for an aircraft engine. Herein, the term "manufacturing" may describe a process for forming and/or otherwise working on the engine component to create (or during the creation of) a brand new engine component. The term "manufacturing" may also or alternatively describe a process for overhauling (e.g., repairing) the engine component to restore one or more features of a previously formed engine component to brand new condition, similar to brand new condition or better than brand new condition. However, for ease of description, the manufacturing systems and methods may be described below with respect to creating the engine component.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present disclosure are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. For example, the present disclosure as described herein includes several aspects and embodiments that include particular features. Although these features may be described individually, it is within the scope of the present disclosure that some or all of these features may be combined with any one of the aspects and remain within the scope of the disclosure. Yet further modifications could be implemented by a person of ordinary skill in the art in view of the present disclosure, which modifications would be within the scope of the present technology.

## Claims

1. A wire electrical discharge machining device (50) for machining a workpiece (54), comprising:
an electrical discharge machining wire (62) spanning between and supported by a first guide assembly (65A) and a second guide assembly (65B), the first guide assembly (65A) located on an upper head (80A) of the wire electrical discharge machining device (50) and the second guide assembly (65B) located on a lower head (80B) of the wire electrical discharge machining device (50), the first guide assembly (65A) including a first electrode guide (60A) and a first nozzle (74A); and
a tool holding system (100) removably mounting at least the first guide assembly (65A) to the upper head (80A) of the wire electrical discharge machining device (50), the tool holding system (100) operable in either an engaged configuration or a released configuration, wherein in the engaged configuration the first guide assembly (65A) is retained in an operating position and in the released configuration the first guide assembly (65A) is detachable from the upper head (80A) of the wire electrical discharge machining device (50) for interchange with a replacement component.

2. The wire electrical discharge machining device (50) of claim 1, wherein the tool holding system (100) includes a clamping device (120), the clamping device (120) releasably locking the first guide assembly (65A) or the replacement component in the operating position.

3. The wire electrical discharge machining device (50) of claim 2, wherein the clamping device (120) includes a coupling (124), the coupling (124) being a mechanical coupling, a hydraulic coupling, a magnetic or electro-magnetic coupling, a pneumatic coupling, or a combination of any one or more thereof, and optionally wherein the coupling (124) of the clamping device (120) includes one or more locking elements (128) which are actuated radially inwardly toward a reference axis to retain the first guide assembly (65A) and/or the replacement component in the operating position.

4. The wire electrical discharge machining device (50) of any one of the preceding claims, wherein the replacement component is another guide assembly (65) or a probe (130).

5. The wire electrical discharge machining device (50) of any one of the preceding claims, further comprising a replacement guide assembly (65) interchangeable with the first guide assembly (65A), the replacement guide assembly (65) being retained in the operating position by the tool holding system (100) upon removal of the first guide assembly (65A).

6. The wire electrical discharge machining device (50) of any one of the preceding claims, further comprising a probe (130) adapted for accurately determining a position of the workpiece (54) to be machined, wherein the probe (130) is retained in a probing position by the tool holding system (100) in the engaged configuration, the probing position of the probe (130) and the operating position of the first guide assembly (65A) being aligned, and optionally wherein a probe axis (132) extending through the probe (130) in the probing position is aligned with a tool axis (70) defined by a working portion (68) of the electrical discharge machining wire (62) between first guide assembly (65A) and a second guide assembly (65B).

7. The wire electrical discharge machining device (50) of any one of the preceding claims, further comprising a controller (52) in signal communication with the wire electrical discharge machining device (50), the controller (52) configured to determine whether a component is mounted in the tool holding system (100), and optionally wherein the controller (52) is configured to recognize the first guide assembly (65A) and the replacement component.

8. The wire electrical discharge machining device (50) of any one of the preceding claims, further comprising one or more manipulators (76A, 76B, 78) configured for relatively moving the workpiece (54) and the electrical discharge machining wire (62), and optionally wherein the one or more manipulators (76A, 76B, 78) include a first manipulator (76A) configured to move the upper head (80A) and a second manipulator (76B) configured to move the lower head (80B).

9. The wire electrical discharge machining device (50) of any one of the preceding claims, wherein the second guide assembly (65B) is removably mounted to the lower head (80B) of the wire electrical discharge machining device (50), and optionally wherein the tool holding system (100) includes a second clamping device (120), the second clamping device (120) removably mounting the second guide assembly (65B) to the lower head (80B).

10. A method of operating the wire electrical discharge machining device (50) of any preceding claim, the method comprising:
removing the first guide assembly (65A) from the upper head (80A) by releasing a clamping device (120) of the tool holding system (100) retaining the first guide assembly (65A) in place at the reference position; and
replacing the first guide assembly (65A) by the replacement component, including removably mounting, using the clamping device (120), the replacement component on the upper head (80A) of the wire electrical discharge machining device (50) in the reference position.

11. A method for machining a workpiece (54) using a wire electrical discharge machining device (50), the method comprising:
mounting a probe (130) on an upper head (80A) of the wire electrical discharge machining device (50), the probe (130) being retained in a predetermined reference position on the wire electrical discharge machining device (50);
performing a calibration of the workpiece (54) using the probe (130), including relatively displacing the probe (130) and the workpiece (54);
removing the probe (130) from the upper head (80A) and mounting, in place of the probe (130), a first guide assembly (65A) in the predetermined reference position; and
providing an electrical discharge machining wire (62) spanning between the first guide assembly (65A) removably mounted to the upper head (80A) of the wire electrical discharge machining device (50) and a second guide assembly (65B) located within a lower head (80B) of the wire electrical discharge machining device (50); and
cutting the workpiece (54) using the electrical discharge machining wire (62).

12. The method of claim 11, further comprising using a tool holding system (100) for: the mounting of the probe (130); the removing of the probe (130); and the mounting of the first guide assembly (65A).

13. The method of claim 12, further comprising releasably locking the probe (130) and the first guide assembly (65A) using a clamping device (120) of the tool holding system (100).

14. The method of claim 13, further comprising actuating the clamping device (120) using one of a hydraulic coupling, a pneumatic coupling, a mechanical coupling or a magnetic coupling.

15. The method of any one of claims 11 to 14, further comprising ensuring that a probe axis (132) extending through the probe (130) when in position on the upper head (80A) is aligned with a tool axis (70) extending through the first guide assembly (65A) when in position on the upper head (80A), the probe axis (132) and the tool axis (70) being free of any lateral offset therebetween.
